# EUROPEAN PATENT APPLICATION

(11) **EP 0 827 014 A2**
(43) Date of publication of application: **04.03.1998**
(21) Application number: 97114847.3
(22) Date of filing: 27.08.1997
(51) Int. Cl.: G03B 21/132

(54) **Projector**

(30) Priority: 03.09.1996 GB 9618334
(71) Applicant: ACCO-REXEL GROUP SERVICES PLC, West Drayton Middlesex UB7 0LQ (GB)
(72) Inventor: Larard, Simon, Brackley, Northants. NN13 7XU (GB)
(74) Representative: Frankland, Nigel Howard

(57) **Abstract**

A projector, said projector comprising a light source and means defining a light path extending from the light source, the light path having a predetermined area, said light path passing through means adapted to locate an image-forming element, controllable means being provided adapted to mask at least a selected area of the light path to enable a selected part of the image to be masked.

## Description

THE PRESENT INVENTION relates to a projector and more particularly relates to an overhead projector.

A typical overhead projector comprises a housing containing a light source. The upper part of the housing is provided with a window or transparency support surface. A transparency may be located on the window transparency support surface and light will shine through the transparency. Located above the transparency support surface is a mirror or prism which acts as a reflector to direct the light passing through the transparency on to a screen. An appropriate adjustment mechanism may be provided so that the image on the screen may be in sharp focus.

An overhead projector of this type is frequently used by a person giving a verbal presentation such as, for example, a teacher or lecturer. It is often the case that it is inconvenient for the persons listening to the presentation or lecture to be able to read the whole of the information present on the transparency before the person giving the presentation has had an opportunity to explain the significance of the information.

The present invention seeks to provide an improved projector.

According to this invention there is provided a projector, said projector comprising a light source and means defining a light path extending from the light source, the light path having a predetermined area, said light path passing through means adapted to locate an image-forming element, controllable means being provided adapted to mask at least a selected area of the light path to enable a selected part of the image to be masked.

Preferably the projector is an overhead projector.

Advantageously the masking means comprises an opaque element, means being provided to locate the opaque element at a selected position in the light path to mask said selected part of the image.

Conveniently the opaque element comprises an opaque film, wound on a spring-biassed reel, means being provided to unreel the film to lie in a selected position extending across the light path.

Preferably the film is connected to a slider mounted for sliding movement along a rail, the slider being associated with a manually engageable knob to move the slider.

Conveniently the opaque element is only substantially opaque.

In an alternative embodiment the invention the masking means comprises a liquid crystal device which may also comprise the image-forming element. In use, the part of the liquid crystal device that masks the selected area of the light path is substantially opaque.

In order that the invention may be more readily understood, and so that further features thereof may be appreciated, the invention will now be described, by way of example, with reference to the accompanying drawings in which:
FIGURE 1 is a perspective view of an overhead projector in accordance with the invention which incorporates a masking film;
FIGURE 2 is a perspective view of part of the apparatus shown in Figure 1, with parts illustrated in phantom, showing the mechanism associated with the masking film; and
FIGURE 3 is a sectional view schematically illustrating the overhead projector when in use.

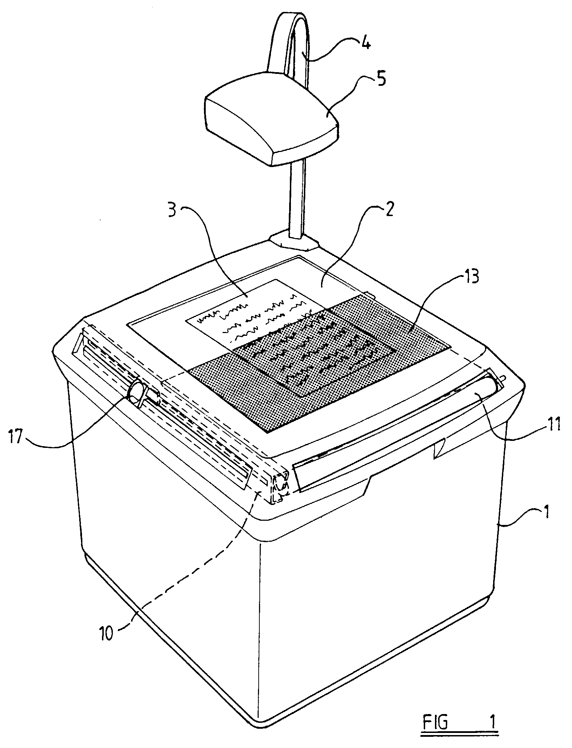

Referring initially to Figure 1 of the accompanying drawings, an overhead projector in accordance with the present invention comprises a housing 1 which contains a light source. The upper part of the housing is provided with a transparent window or transparency support 2 upon which can be located a transparency 3. The transparency 3 may contain information or data which is to be displayed upon a screen.

A support arm 4, which is connected to the housing 1, supports a reflector assembly 5 which may comprise a mirror or a prism.

As thus far described, the overhead projector is conventional. In use of the overhead projector, the light source within the housing 1 will direct light along a light path through the window or transparency support 2. The light path has a cross-sectional area equal to the area of the window or transparency support 2. The light passes through the transparency 3, which constitutes an image-forming element, that light subsequently being reflected by the reflector assembly 5 on to a screen. A focusing or adjustment mechanism (not shown) may be provided to ensure correct focusing of the image on the screen.

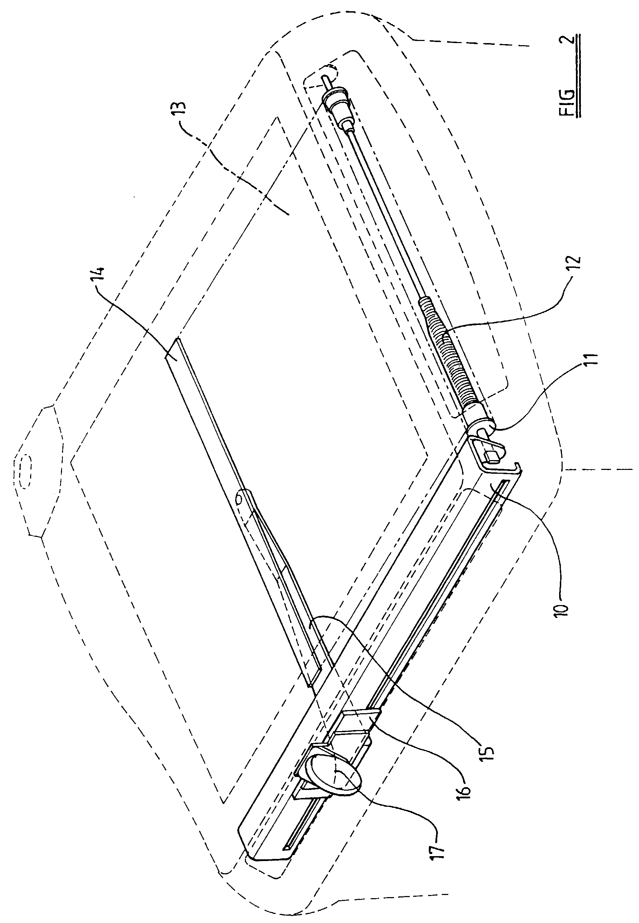

In the overhead projector of Figure 1, as is shown more clearly in Figure 2, contained within the housing, on one side of the window 3, is a support rail 10. At one end of the support rail 10, a transversely extending spring-biassed roller 11 is provided which extends across the entire width of the housing. The roller 1 is provided with an internal spring 12. Wound upon the roller 11 is a substantially opaque film 13. The structure of the roller 11, together with the film 13, is broadly similar to the structure of a conventional window blind. The spring 12 biasses the roller 11 in such a way that the film 13 is wound on to the roller 11.

The leading edge of the opaque film 13 is connected to a rigid film carrier 14. The film carrier 14 extends transversely across the housing. A rigid film leader 15 is provided which extends from the centre part of the film carrier 14 to a slider 16 adapted to slide along the rail 10. The slider 16 is associated with a projecting knob 17 which is accessible from the exterior of the housing.

The knob may be grasped manually and may thus be slid along the rail 11, thus adjusting the position of the film leader 14. The film leader 14 may be moved from a position in which the film 13 is entirely wound on the spool 11, in which case none of the film 13 is located between the light source and the window or transparency support 2, to an alternate position in which the film carrier is located at the end of the window or transparency support 2 which is remote from the spool 11. The film may also be located at any intermediate position.

The film 13 is substantially opaque. It is preferable that the film 13 does permit a very small amount of light to pass through it, but it is also preferable that the amount of light passing through the film 13 is not sufficient to cause a readable image to be projected on to the screen.

It is to be understood that in use of the overhead projector, as described above, if the film 13 is fully wound on to the spool 11, the overhead projector can be used in the conventional manner.

However, if a person giving a presentation using the overhead projector wishes to display information present on a transparency in successive portions, the knob 17 may be moved along the rail 10, so that the film 13 extends over substantially the whole of the window or transparency support 2. The transparency may then be located on the transparency support 2. Because the film 13 is substantially opaque, no image at all is projected to the screen. However, because the film 13 permits a small amount of light to pass through it, the person operating the overhead projector will be able to read the information present on the transparency.

When a part of the information present on the transparency is to be displayed, the knob 17 may be moved, causing some of the film 13 to be wound back on the spool 11. A situation as illustrated in Figure 1 will then obtain. The opaque film 13 then masks a selected area of the light path, enabling a selected part of the image to be masked, while the remaining part of the image is projected.

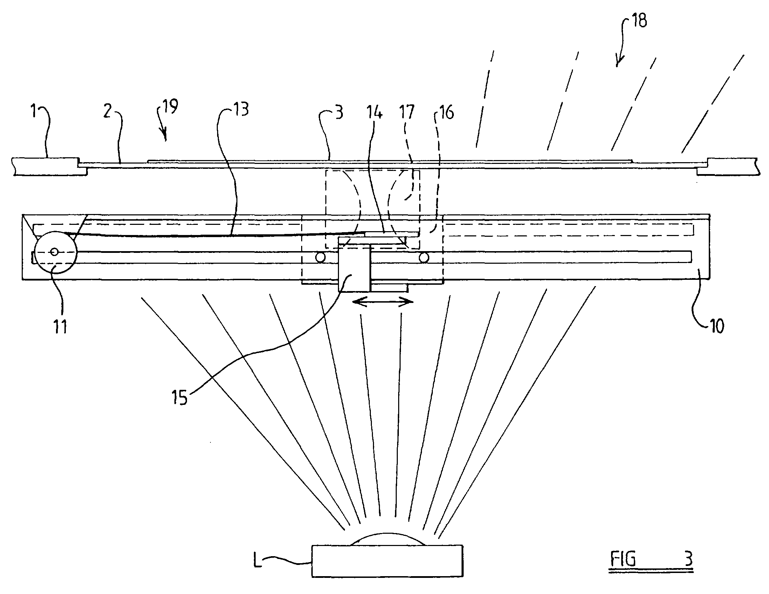

As can be seen from Figure 3, light from the light source 2 will pass through that region 18 of the window or transparency support, which is aligned with the top part of the transparency 3, causing an image of the top part of the transparency to be projected on to the screen, but no light will be permitted to pass through the region 19 of the window or transparency support 2 adjacent the lower part of the transparency, because the opaque film 13 masks this region. The position of the film carrier 14 may be sequentially adjusted, with a result that more and more of the image present on the transparency 3 will be projected on to the screen.

Whilst the invention has been described with reference to one embodiment, it is to be appreciated that modifications may be effected without departing from the scope of the Claims. Whilst in the described embodiment a substantially opaque film is utilised which is moved to a position in which part of the light path from the light source to the screen is masked, in alternative embodiments, other masking means may be utilised. For example, a liquid crystal display, having a size and shape corresponding to that of the window or transparency support 2, may be utilised in place of the window or transparency support 2, and appropriate electronic control means may be provided to cause selected areas of the liquid crystal display to be made opaque (or substantially opaque). The liquid crystal display may be controlled by means of a micro-processor or the like, that micro-processor receiving information from a sliding control generally equivalent to the knob 17. In such an embodiment, however, means may be provided to connect the liquid crystal display to an external computer, or other external data source. The liquid crystal display may thus be caused to perform the function of the transparency 3 as well as forming the masking function.

## Claims

1. A projector, said projector comprising a light source and means defining a light path extending from the light source, the light path having a predetermined area, said light path passing through means adapted to locate an image-forming element, controllable means being provided adapted to mask at least a selected area of the light path to enable a selected part of the image to be masked.

2. A projector according to Claim 1 wherein the projector is an overhead projector.

3. A projector according to Claim 1 or 2 wherein the masking means comprise an opaque element, means being provided to locate the opaque element at a selected position in the light path to mask said selected part of the image.

4. A projector according to Claim 3 wherein the opaque element comprises an opaque film, wound on a spring-biassed reel, means being provided to unreel the film to lie in a selected position extending across the light path.

5. A projector according to Claim 4 wherein the film is connected to a slider mounted for sliding movement along a rail, the slider being associated with a manually engageable knob to move the slider.

6. A projector according to any one of Claims 3 to 5 wherein the opaque element is only substantially opaque.

7. A projector according to Claim 1 or 2 wherein the masking means comprises a liquid crystal device.

8. A projector according to Claim 6 wherein the liquid crystal device also comprises the image-forming element.

9. A projector according to Claim 7 or 8 wherein the part of the liquid crystal device that masks the selected area of the light path is substantially opaque.
